# EUROPEAN PATENT APPLICATION

(11) **EP 2 829 930 A1**
(43) Date of publication of application: **28.01.2015**
(21) Application number: 12871993.7
(22) Date of filing: 23.03.2012
(51) Int. Cl.: G05B 19/418

(54) **PRODUCTION PROJECT PROPOSAL DETERMINATION METHOD, PRODUCTION PROJECT PROPOSAL DEVICE AND PROGRAM**

(71) Applicant: Hitachi, Ltd., Tokyo 100-8280 (JP)
(72) Inventor: KOMURA, Takaaki, Tokyo 100-8290 (JP); IGARASHI, Ken, Tokyo 100-8290 (JP); NAKAMIZO, Katsuaki, Tokyo 100-8290 (JP); SHIDA, Daisuke, Tokyo 100-8290 (JP)
(74) Representative: Moore, Graeme Patrick
(86) International application number: PCT/JP2012/057562
(87) International publication number: WO 2013/140613

(57) **Abstract**

A production plan planning method having: receiving, by a computer, an order including production time information on a product in a received order condition as received order information; searching, by the computer, the production schedule information storage part for production schedule information on the product stored in the received order information; allocating, by the computer, production schedule information on each process for the at least one first component to the retrieved production schedule information; and controlling, by the computer, the allocated production schedule information on the each process to take over the production time information, the third step comprising allocating production schedule information satisfying the production time information included in the received order condition of the received order information to the each process, the fourth step comprising controlling the respective allocated processes to sequentially take over production time information on a first process of the product.

## Description

### BACKGROUND OF THE INVENTION

This invention relates to a technology for managing, on a computer, a production plan for producing a product, and more particularly, to improvement of a technology for managing a production schedule or stock satisfying a received order condition.

In recent years, in the manufacturing industry, a production plan is planned by simply allocating, when there are products in stock or products scheduled to be produced which can be allocated to a received order, those products in a first-in/first-out manner. However, there are an increasing number of cases in which customer needs cannot be met by such a simple algorithm as that of the related-art production plan planning system. In order to meet the needs of customers, for example, there has been proposed, as a production management system adapted to a case in which needs of customers change and a sudden inquiry for order is received, a technology of updating calculated component procurement conditions on a component vendor side in response to a change in product order reception conditions (for example, JP 2006-39869 A).

Moreover, in a production plan planning system for producing foods as products, a valid period starting from a production completion date when the production of the product is completed is set, and the products are shipped or delivered within the valid period.

### SUMMARY

However, in the related-art production plan planning system, a production plan is planned by a deployment in only in direction, namely, only by a backward deployment (from future to past) or a forward deployment (from past to future) with respect to a production completion date based on a product, a quantity, and a due date. Therefore, there has been such a problem that, if a condition for a production start date is added as production time information on a component or a product when an order is received from a customer, it is not possible to select products to be delivered in consideration of the condition, and thus it is difficult to satisfy restraint of an excess or deficiency of an allocated quantity and minimized disposal of components at the same time.

In particular, if one product is manufactured from a plurality of components (or intermediate products), respective production start dates need to satisfy the received order condition. However, the related-art examples have such a problem that the production start dates cannot be acquired for all the components constituting one product.

A representative aspect of the present disclosure is as follows. A production plan planning method for storing, by a computer comprising a processor and a storage, production schedule information on at least one first component constituting a product and at least one second component constituting the at least one first component, in a production schedule information storage part of the storage, receiving an order for the product, and generating a production process for the product, the production plan planning method comprising: a first step of receiving, by the computer, the order including production time information on the product in a received order condition as received order information; a second step of searching, by the computer, the production schedule information storage part for production schedule information on the product stored in the received order information; a third step of allocating, by the computer, production schedule information on each process for the at least one first component to the retrieved production schedule information; and a fourth step of controlling, by the computer, the allocated production schedule information on the each process to take over the production time information, the third step comprising allocating production schedule information satisfying the production time information included in the received order condition of the received order information to the each process, the fourth step comprising controlling the respective allocated processes to sequentially take over production time information on a first process of the product.

According to one embodiment this invention, even when a condition for the production time information on a product is added when an order is received, optimal products can be easily selected in consideration of the condition, and thus the restraint of an excess or deficiency of an allocated quantity and the minimized disposal of components and raw materials can be satisfied at the same time.

### BRIEF DESCRIPTION OF THE DRAWINGS

FIG. 1 is a block diagram illustrating an example of a computer system constructed mainly of a production plan planning apparatus according to a first embodiment of this invention.
FIG. 2 shows an example of the received order information recording part according to a first embodiment of this invention.
FIG. 3 shows an example of the stock information recording part according to the first embodiment of this invention.
FIG. 4 shows an example of the allocation information recording part according to the first embodiment of this invention.
FIG. 5 shows an example of the component information recording part according to the first embodiment of this invention.
FIG. 6 shows an example of the process information recording part according to the first embodiment of this invention.
FIG. 7 shows an example of the production schedule information recording part according to the first embodiment of this invention.
FIG. 8 shows an example of the production instruction information recording part according to the first embodiment of this invention.
FIG. 9 is a flowchart illustrating an example of processing carried out by the received order information acquisition part according to the first embodiment of this invention.
FIG. 10 is a flowchart illustrating an example of processing carried out by the received order condition analysis part according to the first embodiment of this invention.
FIG. 11 is a flowchart illustrating an example of processing carried out by the production schedule information acquisition part according to the first embodiment of this invention.
FIG. 12 is a flowchart illustrating an example of processing carried out by the allocation processing execution part according to the first embodiment of this invention.
FIG. 13A is a flowchart illustrating an example of processing of the first half carried out in the allocation processing according to the first embodiment of this invention.
FIG. 13B is a flowchart illustrating an example of processing of the last half carried out in the allocation processing according to the first embodiment of this invention.
FIG. 14 is a screen image illustrating an example of received orders and production schedules on the display apparatus according to the first embodiment of this invention.
FIG. 15 is a screen image illustrating an example of the received order information input screen according to the first embodiment of this invention.
FIG. 16 is a screen image illustrating an example of a received order information detail display screen according to the first embodiment of this invention.
FIG. 17 is a screen image illustrating an example of the production schedule information input screen according to the first embodiment of this invention.
FIG. 18 is a screen image illustrating an example of a production schedule information detail display screen according to the first embodiment of this invention.
FIG. 19 is a time chart illustrating an example of allocations of a received order, components, and a product according to the first embodiment of this invention.
FIG. 20A illustrates a first half of the processing carried out by the allocation processing execution part according to a second embodiment of this invention.
FIG. 20B illustrates a last half of the processing carried out by the allocation processing execution part according to the second embodiment of this invention.

### DETAILED DESCRIPTION OF THE PREFERRED EMBODIMENTS

A description is now given of embodiments of this invention referring to the accompanying drawings.

### <First embodiment>

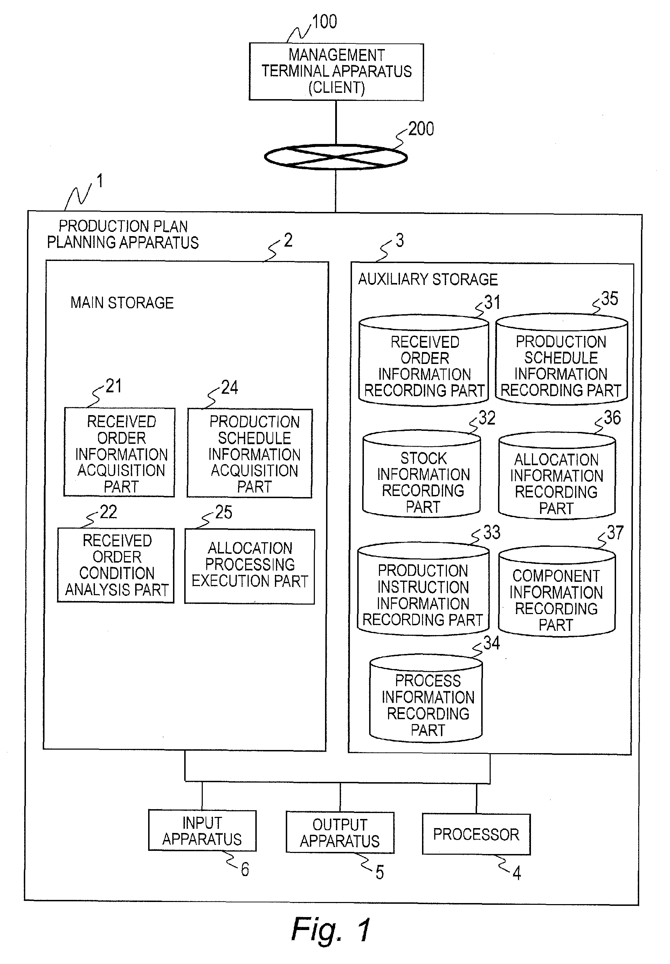

FIG. 1 is a block diagram illustrating an example of a configuration of a computer system constructed mainly of a production plan planning apparatus 1 according to a first embodiment of this invention.

The production plan planning apparatus 1 is coupled to a management terminal apparatus 100 via a network 200. The management terminal apparatus 100 includes an input apparatus and a display apparatus, which are not shown, for receiving an input from a user and an administrator, and inputs various requests to the production plan planning apparatus 1.

The production plan planning apparatus 1 includes a processor 4 for carrying out calculation processing, a main storage 2 for holding programs and data, an auxiliary storage 3 including a non-volatile storage medium for holding data and programs, an input apparatus 6 including a keyboard and a mouse, and an output apparatus 5 including a display and a printer.

The main storage 2 holds a received order information acquisition part 21, a production schedule information acquisition part 24, a received order condition analysis part 22, and an allocation processing execution part 25. The auxiliary storage 3 includes a received order information recording part 31, a production schedule information recording part 35, a stock information recording part 32, an allocation information recording part 36, a production instruction information recording part 33, a component information recording part 37, and a process information recording part 34.

Respective functional parts including the received order information acquisition part 21, the production schedule information acquisition part 24, the received order condition analysis part 22, and the allocation processing execution part 25 are loaded from the auxiliary storage 3 into the main storage 2 as programs.

The processor 4 operates in accordance with the programs of the respective functional parts, thereby operating as the functional parts for realizing predetermined functions. For example, the processor 4 operates in accordance with a received order information acquisition program, thereby functioning as the received order information acquisition part 21. The same holds true for the other programs. Further, the processor 4 also operates as a functional part of realizing a plurality of respective pieces of processing carried out by the respective programs. The computer and the computer system are an apparatus and a system including these functional parts.

Information such as programs and tables for realizing each of the functions can be stored in a memory device such as the auxiliary storage 3, a non-volatile semiconductor memory, a hard disk drive, and a solid state drive (SSD), and a computer-readable non-transitory data storage medium such as an IC card, an SD card, and a DVD.

A description is now given of an overview of the respective functional parts. The received order information acquisition part 21 checks validity of input values from received order information (or order information) input on the management terminal apparatus 100, and stores the information in the received order information recording part 31. The production schedule information acquisition part 24 checks validity of input values from production schedule information input on the management terminal apparatus 100, and records the production schedule information in the production schedule information recording part 35. The received order condition analysis part 22 acquires a received order condition included in the received order information from the received order information recording part 31, and converts the received order condition into predetermined information to be handled inside the production plan planning apparatus 1. The allocation processing execution part 25 acquires information from the component information recording part 37, the process information recording part 34, the received order information recording part 31, and the production schedule information recording part 35, and manages the execution of allocation processing. The allocation processing includes allocating production schedule information on a product to received order information, allocating processes for producing components or raw materials starting from the production schedule information, and determining a production period for each of the processes. Then, in the allocation processing, production time information is taken over from a process of a production start toward a production process for the end product. Finally, in the allocation processing, a combination of processes having production time information on the respective components and the product satisfying the received order condition included in the received order information is generated.

On this occasion, the production time information includes a date (or a time or a date and a time) of the production start and a date (or a time or a date and a time) of production completion, and the production start date is taken over to a following process between processes. The production completion date represents a date when manufacturing of a product or a component is completed. In contrast, the production start date is the oldest production start date (or the oldest time or the oldest date and time) out of the production start dates if components and materials or raw materials constituting the product, and is taken over to the respective processes. For example, if a product A is manufactured from a material B manufactured from a raw material C, a date of starting processing of the raw material C is taken over to the material B and then to the product A as the production start date. A detailed description is later given of each of the functional parts.

On the other hand, a production period of each process includes a date (or a time or a date and a time) of production start and a date (or a time or a date and a time) of production completion of the each process, and is not taken over between processes.

In this embodiment, a description is given of an end product, a component constituting the end product, and a raw material constituting the component as an example, but this invention is not limited to this example and can be applied to various products and materials in this configuration relationship. In other words, such a relationship that a product, first components constituting the product, and second components constituting the first components is only necessary.

A description is now given of information on tables and the like stored in the auxiliary storage 3. The received order information recording part 31 stores information on received orders input from the management terminal apparatus 100. The production schedule information recording part 35 stores information on products (or components, materials, and raw materials) to be produced input from the management terminal apparatus 100. The stock information recording part 32 stores information on stocks of raw materials, materials, intermediate products, and products.

The allocation information recording part 36 stores information on allocation sources and allocation destinations for received orders, stocks, production schedules, and production instructions. The production instruction information recording part 33 stores production instruction information generated by the allocation processing execution part 25. The production instruction information is a production schedule automatically generated by the allocation processing execution part 25, and may be treated as production schedule information having a fixed allocation destination. The component information recording part 37 stores information on parent/child relationships between components (or products and materials). The process information recording part 34 stores periods (lead times) required for operations of producing components or products.

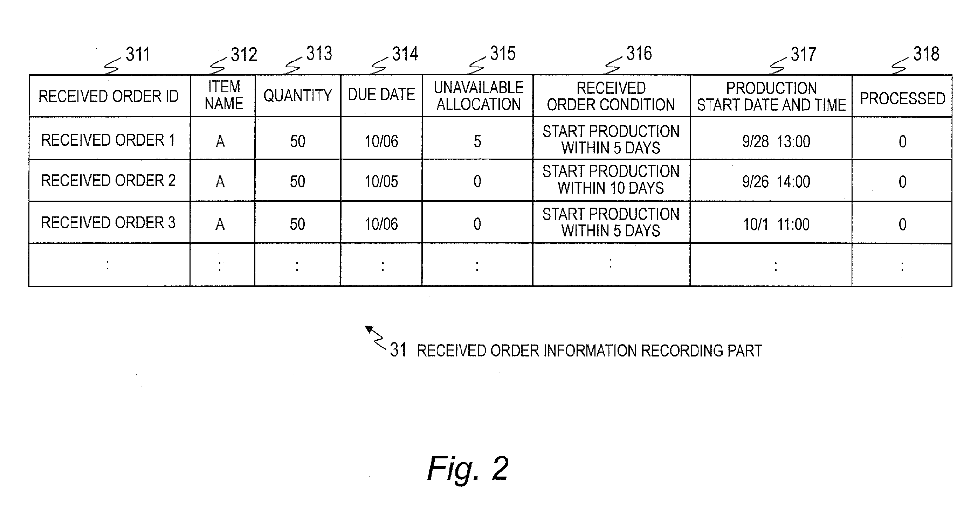

FIG. 2 shows an example of the received order information recording part 31. The received order information recording part 31 includes entries each including a received order ID 311 for storing an identifier of received order information, an item name 312 for storing a name of a product, a quantity 313 for storing a quantity of the ordered product, a due date 314 for storing a time limit of delivery, an unavailable allocation 315 for storing an insufficient quantity of allocation subjects if sufficient allocation subjects satisfying a received order condition are not available, a received order condition 316 for storing the condition specified by a customer when the order is received, a production start date and time 317 for storing a production start date and time of the product calculated from the received order condition, and a processed allocation 318 representing whether allocation for the received order of this entry has been completed or not. Regarding the calculation of the production start date and time 317, if the received order condition 316 is such a condition that the production is started within *X* days, the received order information acquisition part 21 calculates a date and time within *X* days from a time point of receiving the order.

The received order ID 311 is a unique value assigned by the received order information acquisition part 21. The unavailable allocation 315 stores a quantity of allocation subjects for which allocation is not available. If the unavailable allocation 315 is 0, the ordered quantity 313 is allocated, and if the unavailable allocation 315 is more than 0, the unavailable allocation 315 represents a quantity of products for which the allocation is not available. Moreover, the production start date and time 317 stores a start date and time of production calculated by the production plan planning apparatus 1 when the order is received. If the processed allocation 318 stores "1", the allocation has been completed for the received order of this entry, and if the processed allocation 318 stores "0", the allocation has not been processed yet.

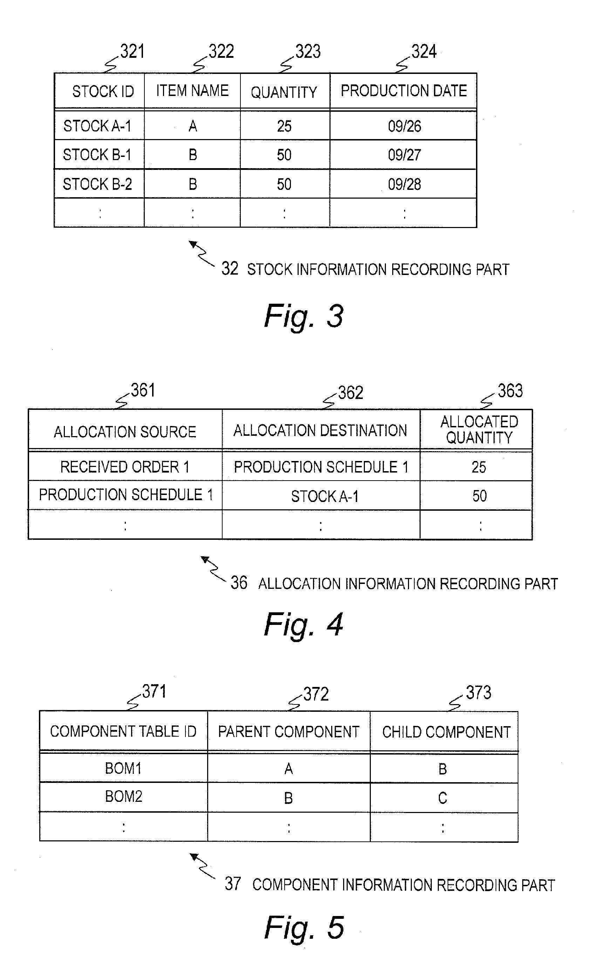

FIG. 3 shows an example of the stock information recording part 32 according to the first embodiment of this invention. The stock information recording part 32 includes entries each including a stock ID 321 for storing an identifier of a stock, an item name 322 for storing a name of a product or a component, a quantity 323 for storing a quantity of the stock, and a production date 324 for storing a date or a time stamp when production of the product is started. The stock ID 321 is a unique value assigned by the allocation processing execution part 25.

FIG. 4 shows an example of the allocation information recording part 36. The allocation information recording part 32 includes entries each including an allocation source 361 for storing an identifier of received order information, production schedule information, or production instruction information which is an allocation source, an allocation destination 362 for storing an identifier of production schedule information, production instruction information, or stock information which is an allocation destination, and an allocated quantity 363. A first entry of FIG. 4 represents that 25 items are allocated from a production schedule 1 to a received order 1.

FIG. 5 shows an example of the component information recording part 37. The component information recording part 37 includes entries each including a component table ID 371 for storing an identifier of a component table, a parent item name 372 for storing an item name corresponding to a parent in the component table, and a child item name 373 for storing an item name corresponding to a child in the component table. The component table ID 371 is a unique value set in advance. A first entry of FIG. 5 represents that an item having a parent item name A is produced by using an item having a child item name B.

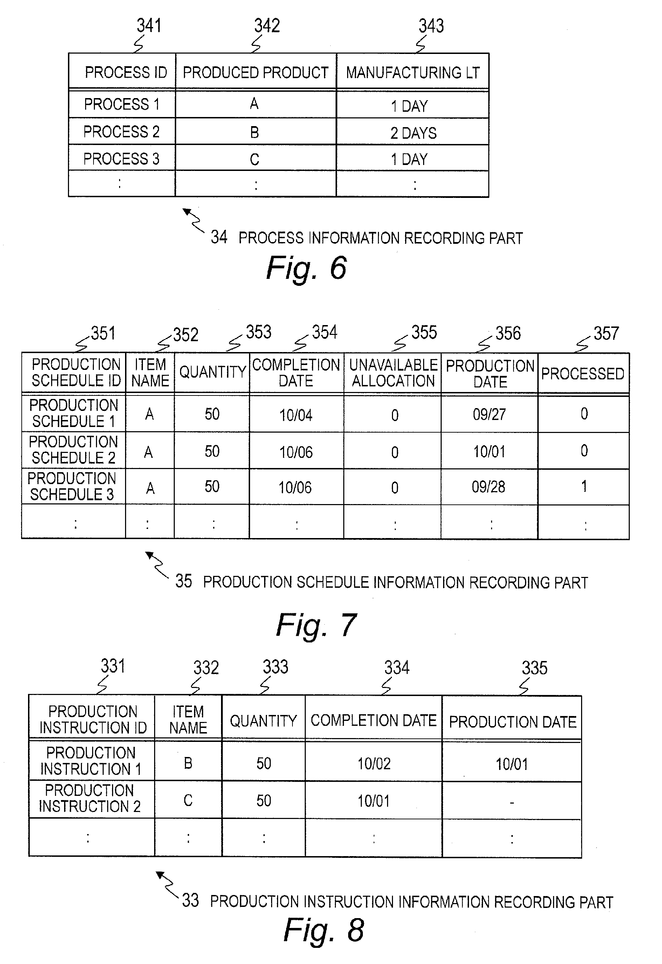

FIG. 6 shows an example of the process information recording part 34. The process information recording part 34 includes entries each including a process ID 341 for storing an identifier of a process, a produced product 342 for storing a name of a product or a component produced by the process, and a manufacturing LT 343 for storing a period (lead time) required to manufacture the product. The process ID 341 is a unique value set in advance.

FIG. 7 shows an example of the production schedule information recording part 35. The production schedule information recording part 35 includes entries each including a production schedule ID 351 for storing an identifier of production schedule information, an item name 352 for storing a name of a product or a component produced by following the production schedule information, a quantity 353 for storing a quantity of the product to be manufactured, a completion date 354 for storing a scheduled date of completion of the production, an unavailable allocation 355 for storing an insufficient quantity of allocation subjects if sufficient allocation subjects satisfying a received order condition are not available, a production date 356 for storing a date or a timestamp when production of the product is started, and a processed allocation 357 representing whether allocation has been completed or not for the production schedule information for this entry.

The production schedule ID 341 is a unique value set by the production schedule information acquisition part 24. If the unavailable allocation 355 is 0, the quantity (or volume) 353 of products or components to be produced is allocated, and if the unavailable allocation 355 is more than 0, the unavailable allocation 355 represents a quantity of the products for which the allocation is not available. If the processed allocation 357 stores "1", the allocation has been completed for the production schedule information of this entry, and if the processed allocation 357 stores "0", the allocation has not been processed yet.

FIG. 8 shows an example of the production instruction information recording part 33. The production instruction information recording part 33 includes entries each including a production instruction ID 331 for storing an identifier of production instruction, an item name 332 for storing a name of a product or a component produced by following the production instruction, a quantity 333 for storing a quantity of the product to be manufactured, a completion date 334 for storing a scheduled date of completion of the production, and a production date 335 for storing a date or a timestamp when production of the product is started. The production instruction ID 331 is a unique value set by the allocation processing execution part 25.

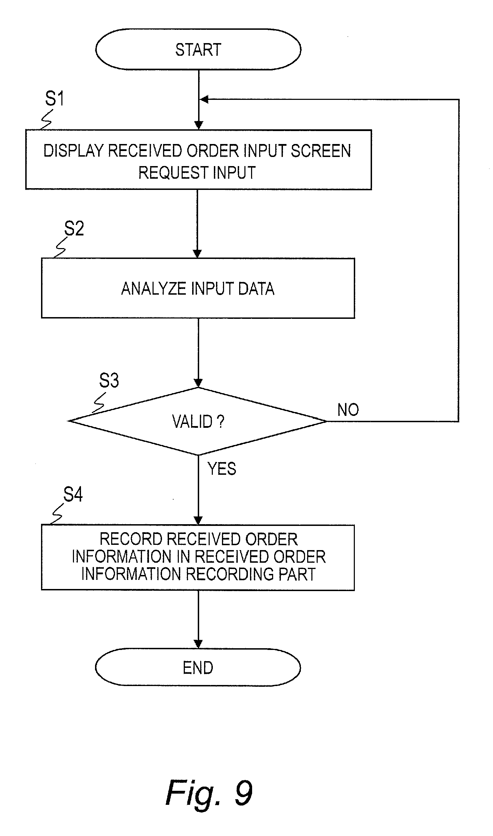

FIG. 9 is a flowchart illustrating an example of processing carried out by the received order information acquisition part 21. This processing is carried out by the processor 4 when an input is requested by the management terminal apparatus 100. First, in Step S1, the received order information acquisition part 21 executed by the processor 4 transmits a received order information input screen to the management terminal apparatus 100, and receives an input from the management terminal apparatus 100. In Step S2, the received order information acquisition part 21 analyzes information received from the management terminal apparatus 100. In Step S3, the received order information acquisition part 21 determines whether the received order information which has been received is valid or not based on a result of the analysis. When the received order information is valid, the received order information acquisition part 21 proceeds to Step S4, and when the received order information includes an error, the received order information acquisition part 21 returns to Step S1, and prompts an input.

In Step S4, the received order information acquisition part 21 adds a new entry to the received order information recording part 31, and stores the received order information which has been received in the added entry.

As a result of this processing, the new received order information input from the management terminal apparatus 100 is stored in the received order information recording part 31 of the production plan planning apparatus 1.

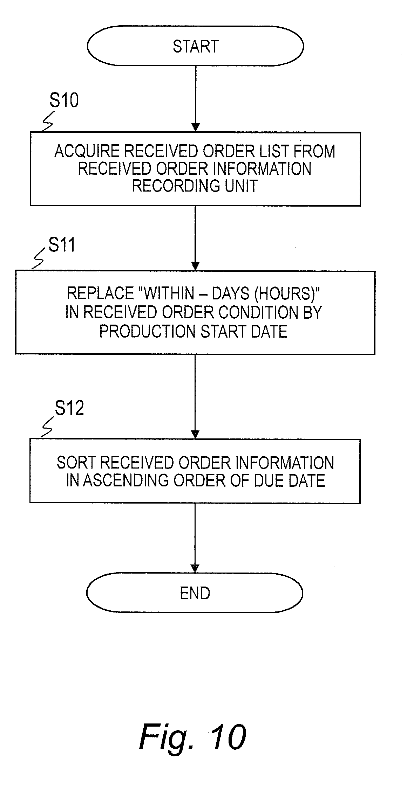

FIG. 10 is a flowchart illustrating an example of processing carried out by the received order condition analysis part 22. This processing is carried out by the processor 4 when new received order information is stored in the received order information recording part 31. First, in Step S10, the received order condition analysis part 22 executed on the processor 4 acquires a list of received order information from the received order information recording part 31.

In Step S11, the received order condition analysis part 22 selects an entry having vacant production start date and time 317 in the received order information recording part 31, and calculates the oldest date and time in a period of the production start stored in the received order condition 316 as the production start date and time. Then, in Step S12, the received order condition analysis part 22 sorts the received order information recording part 31 in an ascending order of the production start date and time 317. It should be noted that in this processing, entries for which the delivery is not processed (processed allocation 318=0) in the received order information recording part 31 are preferably set as subjects of the processing.

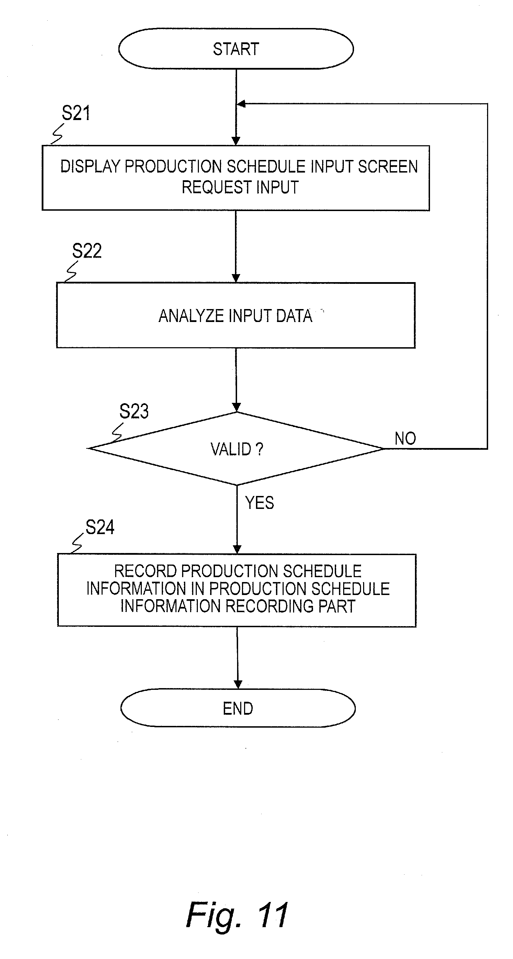

FIG. 11 is a flowchart illustrating an example of processing carried out by the production schedule information acquisition part 24. This processing is carried out by the processor 4 when the production plan planning apparatus 1 receives an input from the input apparatus 6. First, in Step S21, the production schedule information acquisition part 24 executed by the processor 4 transmits a production schedule input screen to the output apparatus 5 for display, and receives an input from the input apparatus 6. In Step S22, the production schedule information acquisition part 24 analyzes information on a production schedule received from the input apparatus 6. In Step S23, the production schedule information acquisition part 24 determines whether the received production schedule information is valid or not based on a result of the analysis. When the production schedule information is valid, the production schedule information acquisition part 24 proceeds to Step S24, and when the production schedule information includes an error, the production schedule information acquisition part 24 returns to Step S21, and prompts an input.

In Step S24, the production schedule information acquisition part 24 adds a new entry to the production schedule information 35, and stores the production schedule information which has been received in the added entry.

As a result of this processing, the new production schedule information input from the input apparatus 6 is stored in the production schedule information recording part 31 of the production plan planning apparatus 1.

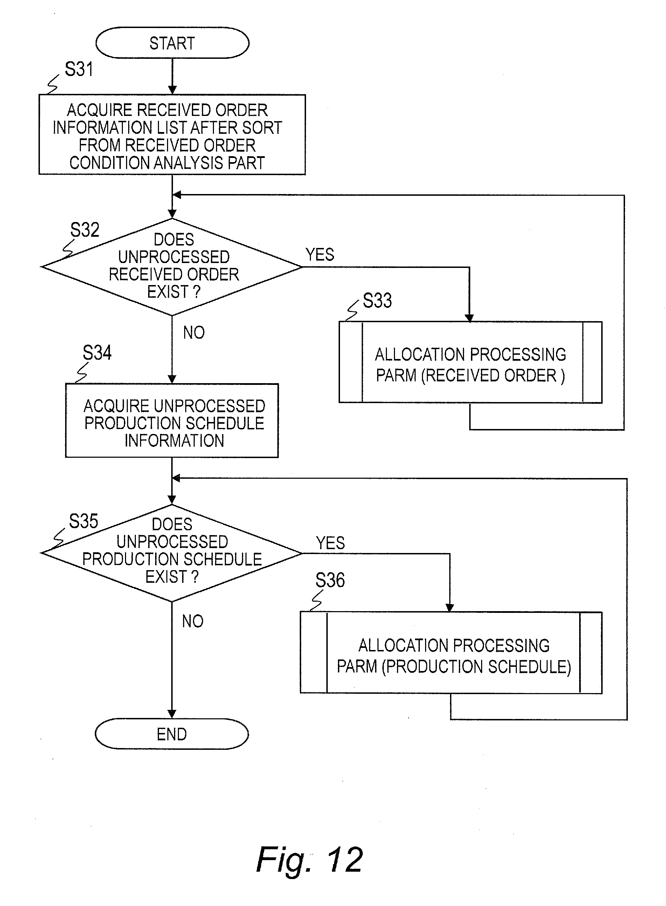

FIG. 12 is a flowchart illustrating an example of processing carried out by the allocation processing execution part 25. This processing is carried out by the processor 4 at a predetermined timing such as a timing when an administrator of the production plan planning apparatus 1 issues an instruction, a timing when new received order information is stored in the received order information recording part 31, and a timing when new production schedule information is stored in the production schedule information recording part 35.

In Step S31, the allocation processing execution part 25 acquires the received order information sorted in Step S12 from the received order condition analysis part 22. Then, in Step S32, the allocation processing execution part 25 determines whether or not an entry for which the allocation has not been processed, namely, entries having "0" in the processed allocation 318 in the received order information recording part 31 of FIG. 2 exists out of the received order information acquired from the received order condition analysis part 22. When received order information for which the allocation has not been processed exists, the allocation processing execution part 25 proceeds to Step S33, and when received order information for which the allocation has not been processed does not exist, the allocation processing execution part 25 proceeds to Step S34.

In Step S33, in order to allocate the production schedule information to the received order information which has not been processed, the allocation processing execution part 25 sets a parameter (PARM of FIG. 12) to "received order", and carries out the allocation processing. When the allocation processing is completed for one piece of the received order information, the allocation processing execution part 25 returns to Step S32, and repeats the processing. Moreover, in the allocation processing, the processed allocation 318 of the received order information for which the allocation has been completed is updated to "1".

Then, in Step S34, the allocation processing execution part 25 refers to the production schedule information recording part 35, and determines whether or not an entry for which the allocation processing has not been processed, namely an entry having "0" in the processed allocation 357 of the production schedule information recording part 35 of FIG. 7 exists. When production schedule information for which the allocation has not been processed exists, the allocation processing execution part 25 proceeds to Step S36, and when production schedule information for which the allocation has not been processed does not exist, the allocation processing execution part 25 finishes the processing.

In Step S36, in order to allocate products or components to the production schedule information which has not been processed, the allocation processing execution part 25 sets the parameter (PARM of FIG. 12) to "production schedule", and carries out the allocation processing. After the allocation processing has been completed for one piece of production schedule information, the allocation processing execution part 25 returns to Step S35, and repeats the processing. In the allocation processing, the processed allocation 357 of the production schedule information for which the allocation has been completed is updated to "1" as in Step 33.

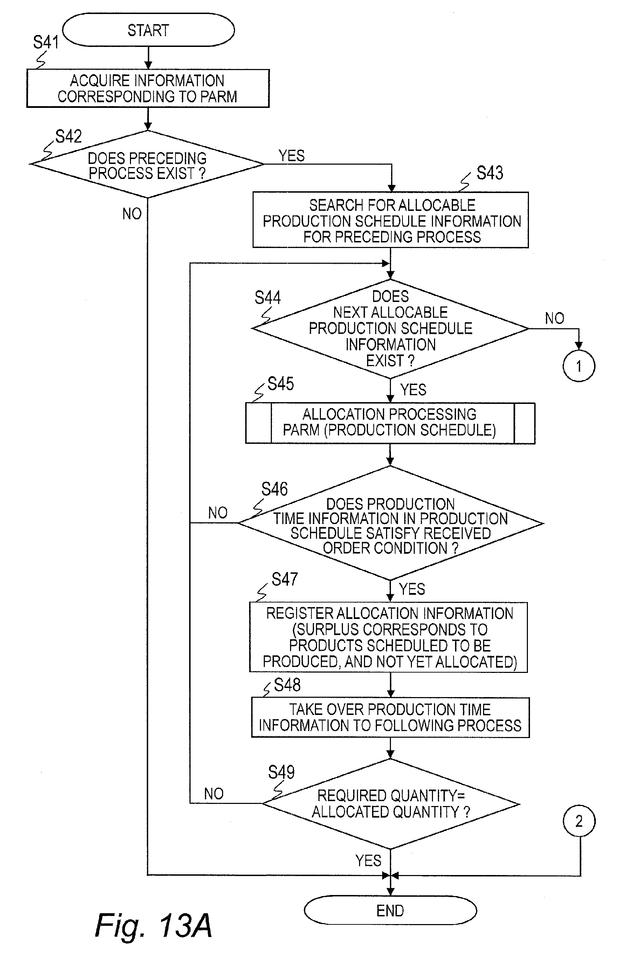

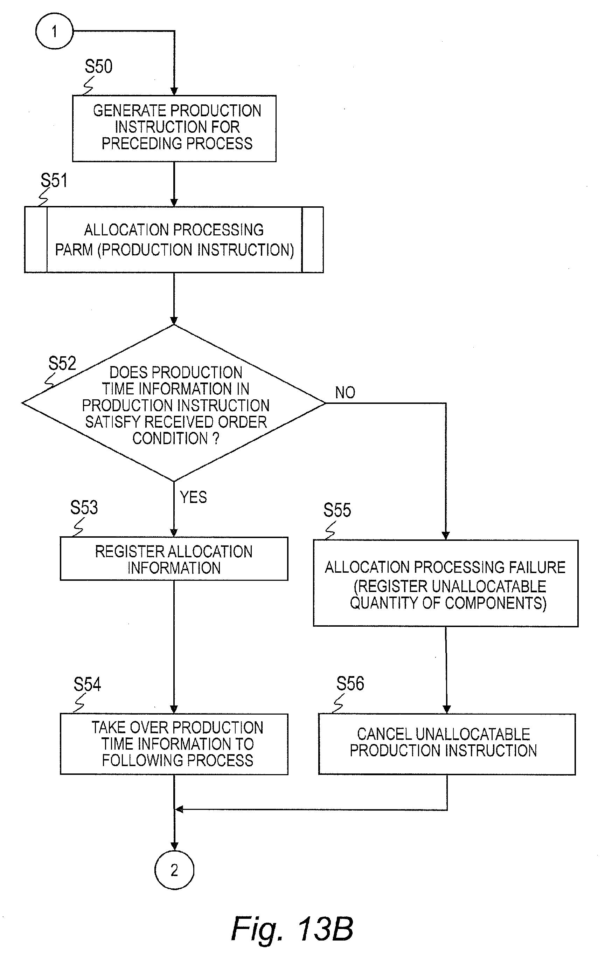

FIGS. 13A and 13B are flowcharts illustrating an example of processing carried out in the allocation processing. This processing is called by the allocation processing of Steps S33 and S36 of FIG. 12, and, as described later, is processing called recursively.

First, in Step S41, the allocation processing execution part 25 acquires from the auxiliary storage 3 information corresponding to the parameter (PARM of FIG. 13A) used to call the allocation processing. For example, when the parameter is "received order", the allocation processing execution part 25 refers to the received order information recording part 31, when the parameter is "production schedule", the allocation processing execution part 25 refers to the production schedule information recording part 35, and when the parameter is "production instruction", the allocation processing execution part 25 refers to the production instruction information acquisition part 33, thereby acquiring information subject to the allocation processing.

In Step S42, the allocation processing execution part 25 determines whether a preceding process of the current processing subject exists or not. On this occasion, when the processing subject is "received order", the allocation processing execution part 25 searches the process information recording part 34, thereby determining whether a process ID matching the production product 342 exists or not as the preceding process. When the processing subject is "production schedule" or "production instruction", the allocation processing execution part 25 searches the component information recording part 37 for a component table ID 371 corresponding to a parent item name 372 storing the produced product of the current process as the preceding process, and, when such a component table ID 371 exists, determines whether a process ID 341 corresponding to a produced product 342 storing a child item name 373 corresponding to the component table ID 371 exists in the process information recording part 34 or not.

When a preceding process exists for the processing subject, the allocation processing execution part 25 proceeds to Step S43, and when a preceding process does not exist, the allocation processing execution part 25 finishes the processing.

In Step S43, the allocation processing execution part 25 searches the production schedule information recording part 35 for production schedule information which can be allocated to the processing subject. Then, the allocation processing execution part 25 selects the production schedule ID 351 of the retrieved production schedule information. When a plurality of pieces of production schedule information which can be allocated are retrieved, the allocation processing execution part 25 preferentially selects the production schedule information oldest in the completion date 354 of the production schedule information recording part 35.

In Step S44, the allocation processing execution part 25 determines whether another piece of production schedule information which can be allocated to the current processing subject (such as production schedule information) exists or not. The allocation processing execution part 25 searches the component information recording part 37 for a child item name 373 which corresponds to a preceding process of the current processing subject, and searches the production schedule information recording part 35 for production schedule information matching the child item name 373, thereby determining whether production schedule information exists or not. Then, when production schedule information which can be allocated exists, the allocation processing execution part 25 proceeds to Step S45, and when production schedule information which can be allocated does not exist, the allocation processing execution part 25 proceeds to Step S50 of FIG. 13B.

In Step S45, the allocation processing execution part 25 sets the allocable production schedule information to the parameter, and recursively calls the allocation processing, thereby carrying out the allocation processing for the production schedule information (or production instruction information).

In Step S46, the allocation processing execution part 25 determines whether the production time information satisfies the received order condition or not for the production schedule information for which the allocation processing has been completed by the recursive allocation processing. On this occasion, the production time information includes the production start date and the production completion date as described above. In Step S46, when the production date 356 (production start date) of the production schedule information recording part 35 is after the production start date and time 317 of the received order information recording part 31, and the completion date 354 of the production schedule information recording part 35 is before the due date 314 of the received order information recording part 31, the allocation processing execution part 25 determines that the production time information satisfies the received order condition, and proceeds to Step S47. When the production time information does not satisfy the received order condition, the allocation processing execution part 25 returns to Step S44, and searches for production schedule information which can be allocated next.

In Step S47, the allocation processing execution part 25 adds an entry having a production schedule ID 351 satisfying the required condition as the allocation destination 362, and having the production schedule information on the preceding process as the allocation source 361 to the allocation information recording part 36, and stores the quantity of the production schedule information in the allocated quantity 363, thereby generating allocation information. When the quantity 353 of the production schedule information is more than the quantity 313 of the received order information, a difference acquired by subtracting the quantity 313 of the received order information from the quantity 353 of the production schedule information is a quantity of a product or a component scheduled to be produced, and is not allocated yet. The products scheduled to be produced and not allocated can be managed as a stock scheduled to be produced.

Then, in Step S48, the allocation processing execution part 25 takes over the production start date of the production schedule information corresponding to the allocation information registered in Step S47 to the following process. This processing duplicates, in the production schedule information recording part 35, the production date 356 (production start date) of the production schedule information older in terms of time series to the production date 356 (production start date) of new production schedule information corresponding to the following process.

In Step S49, the allocation processing execution part 25 determines whether or not the allocated quantity 363 of the allocation information recording part 36 satisfies the quantity 313 (required quantity) corresponding to the received order ID 311 of the received order information recording part 31. When the allocated quantity 363 satisfies the required quantity, the allocation processing execution part 25 finishes the processing. On the other hand, when the allocated quantity 363 does not satisfy the required quantity, the allocation processing execution part 25 returns to Step S44, and searches for production schedule information which can be allocated next.

FIG. 13B illustrates processing carried out when the allocation processing execution part 25 determines in Step S44 that production schedule information which can be allocated next does not exist. In Step S50, the allocation processing execution part 25 generates production instruction information for the production schedule information having the production schedule ID 351 selected in Step S43, which corresponds to the preceding process. In order to generate the production instruction information, the allocation processing execution part 25 acquires the item name 352 corresponding to the production schedule ID 351 of the production schedule information recording part 35, and extracts components (or materials) required for the item name 352 from the component information recording part 37. For example, if the item name 352 of the production schedule information is "A", the allocation processing execution part 25 extracts a component having "B" in the child item name 373 from an entry having "A" in the parent item name 372 in the component information recording part 37. Then, the allocation processing execution part 25 extracts a component having "C" in the child item name 373 from an entry having "B" in the parent item name 372. Then, the allocation processing execution part 25 repeats the processing until an entry having the child item name 373 in the parent item name 372 no longer exists.

The allocation processing execution part 25 generates production instructions for the component "B" for manufacturing the product "A" in the production schedule information, and for the component (or the raw material) "C" for manufacturing the component "B". On this occasion, the allocation processing execution part 25 refers to the process information recording part 34 to acquire the process IDs 341 and the manufacturing lead times (LTs in FIG. 6) for the components "B" and "C". On this occasion, the allocation processing execution part 25 extracts a process ID 341: "process 2" and a manufacturing lead time 343: "2 days" for the component "B", and a process ID 341: "process 3", and a manufacturing lead time 343: "1 day" for the component "C".

The allocation processing execution part 25 uses the production start of the existing production schedule information as a start point to generate production instruction information for the component "B" in a temporally backward direction, and then generates production instruction information for the component "C". In other words, in the example in which the production schedule 2 is allocated to the received order 1, which is currently focused on, the production date 335 representing the production start date of the component "C" is determined from a sum of the manufacturing lead times 343 so that the completion date 334 of the component "B" is set before the production start of the product "A", and the completion date 334 of the component "C" is set before the production start of the product "B". In this case, the production of the component "C" takes "1 day", the production of the component "B" takes "2 days", and thus, as shown in FIG. 8, entries for the components "B" and "C" are generated in the production instruction information recording part 33 so that the production of the component "C" is started three days before the production start of the product "A". In this example, entries "production instruction 1" and "production instruction 2" are added to the production instruction IDs 331 of the production instruction information recording part 33. Values satisfying the quantities 353 of the production schedule information selected in Step S43 is set to the quantities in these entries.

Then, in Step S51, the allocation processing execution part 25 uses as parameters the newly generated "production instruction 1" and "production instruction 2" to recursively call the allocation processing of FIGS. 13A and 13B, thereby allocating "production instruction 1" to "production schedule 2", and allocating "production instruction 2" to "production instruction 1".

Then, in Step S52, the allocation processing execution part 25 determines whether the production instruction information for which the allocation processing has been completed satisfies the received order condition. In this determination, the allocation processing execution part 25 reads corresponding production instruction information and production schedule information from the production instruction information recording part 33, and if the completion date 334 when the production of the component "C" used as the raw material is completed is before the production start date (completion date-manufacturing lead time) of the component "B", and the completion date 334 when the production of the component "B" is completed is before the production start date (completion date 354-manufacturing lead time 343) of the product "A", the allocation processing execution part 25 determines that the production instruction information satisfies the received order condition, and proceeds to Step S53. On the other hand, if the production time information of the production instruction information does not satisfy the received order condition, the allocation processing execution part 25 proceeds to Step S55.

In Step S53, the allocation processing execution part 25 stores the allocation information in the allocation information recording part 36 based on the production instruction information for which the allocation is carried out in Step S51. Then, in Step S54, the allocation processing execution part 25 sets the production start date of the component C, the production of which is started first, to the production dates 335 and 356 of the corresponding entries of the production instruction information recording part 33 and the production schedule information recording part 35 for the respective processes from the component (or raw material) "C" to the product "A", and controls the component "B", the process of which is the next to the process of the component "C" and the product "A", the process of which is next to the process of the component "B", to take over the oldest production start date. In other words, the oldest value out of the production start dates of the raw materials and the components is taken over to the production date 356 representing the production start date of the end product "A".

On the other hand, in Step 55, when the production time information of the production instruction information cannot satisfy the received order condition in Step S52, the allocation to the production schedule information fails, the allocation processing execution part 25 stores a quantity of the components to which the production schedule information cannot be allocated in the allocation information recording part 36. Then, in Step S56, the allocation processing execution part 25 deletes the production instruction information to which the allocation cannot be carried out from the production instruction information recoding part 33, and finishes the processing. On this occasion, the allocation processing execution part 25 may notify the output apparatus 5 and the management terminal apparatus 100 of the failed allocation.

As a result of the processing, the production schedule information (or production instruction information) is allocated to the received order information, and the production instruction information or the production schedule information for the components (or the raw materials) to produce the product specified by the production schedule information is further allocated. Then, for each piece of the production schedule information and production instruction information, the allocation processing execution part 25 determines the production start date and the production completion date from the parent/child relationship between the product and the components set in the component information recording part 37, and the process IDs and the manufacturing lead times of the produced products set in the process information recording part 34. The allocation processing execution part 25 sequentially determines the production start date and the production completion date for each process constituting a preceding process starting from the production schedule information (or production instruction information) allocated to the received order information. Then, when the allocation processing execution part 25 reaches a process constituting the start point of the production, the allocation processing execution part 25 controls the following process to take over the production start date of the process constituting the start point of the production and sets the production start date as the production start date of the end product. In other words, the allocation processing execution part 25 sequentially determines production schedules from the production schedule information (or the production instruction information) allocated to the received order information, and then controls the production start date of the process which constitutes the start point of the production start to be taken over from the following process to the end product.

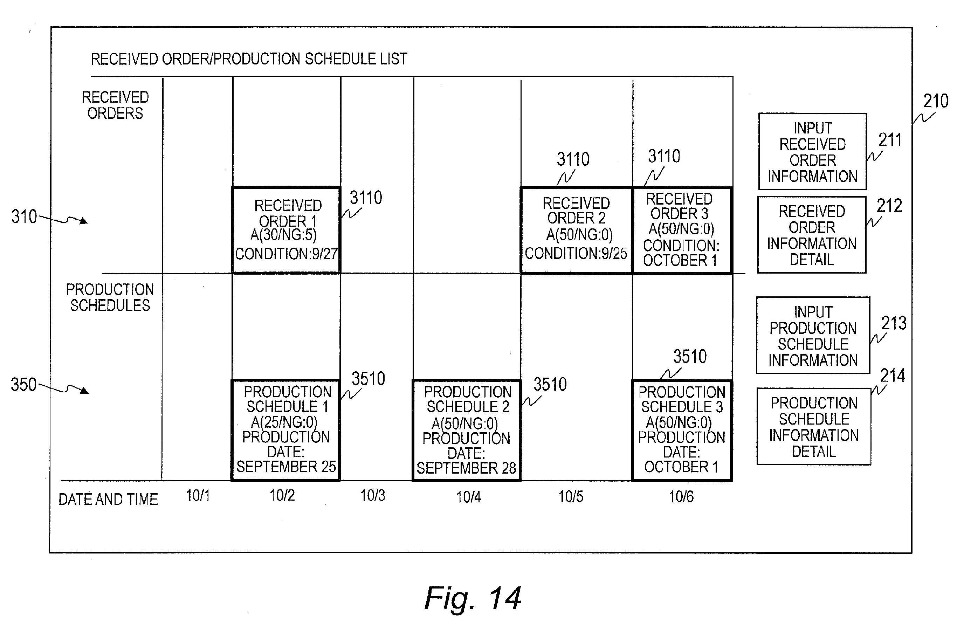

FIG. 14 is a screen image illustrating an example of a screen output on the display apparatus of the management terminal apparatus 100 in Step S1 of FIG. 9, and on the output apparatus 5 of the production plan planning apparatus 1 in Step S21 of FIG. 11

In FIG. 14, a screen 210 for received orders and production schedules is vertically divided into two parts, and includes a display area 310 for displaying the received order information and a display area 350 for displaying the production schedule information.

The received order information 3110 is displayed in time series on the display area 310. In the received order information 3110, the received order ID 311, the item name 312, the quantity 313, and the due date 314 are displayed in the stated order from a top of FIG. 14.

The production schedule information 3510 is displayed in time series on the display area 350. In the production schedule information 3510, the production schedule ID 331, the item name 332, the quantity 333, and the production date (production start date) 334 are displayed in the stated order from the top of FIG. 14.

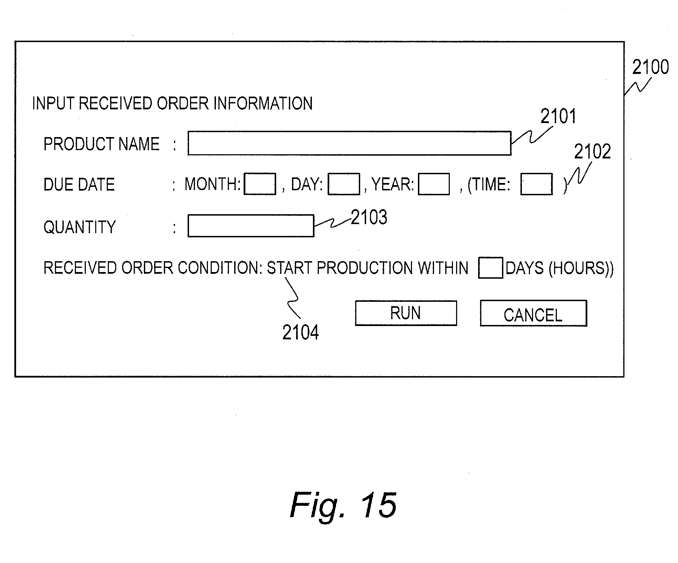

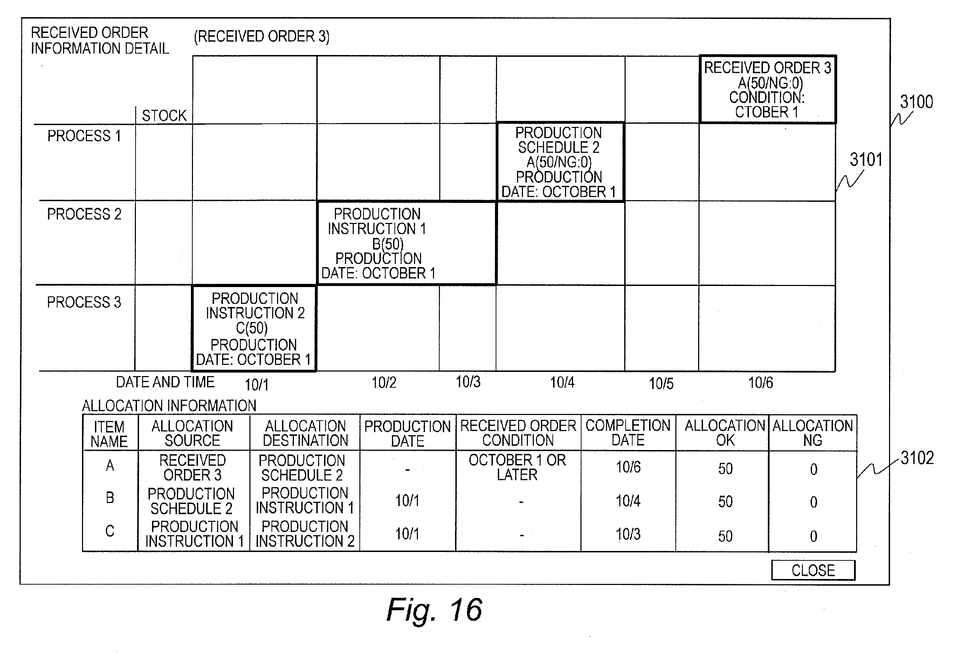

A received order information input button 211 and a received order information detail button 212 are arranged on a right side of the display area 310. When the received order information input button 211 is operated by the input apparatus such as a mouse, the screen transitions to the received order information input screen of FIG. 15. When the received order information detail button 212 is operated, the screen transitions to a received order information detail display screen of FIG. 16.

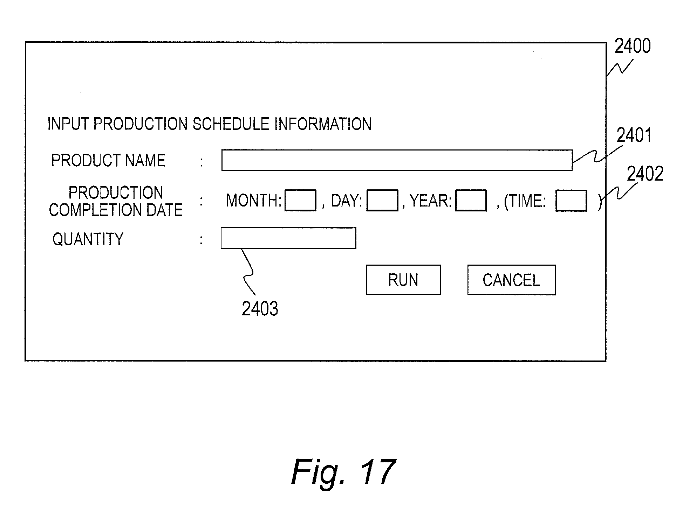

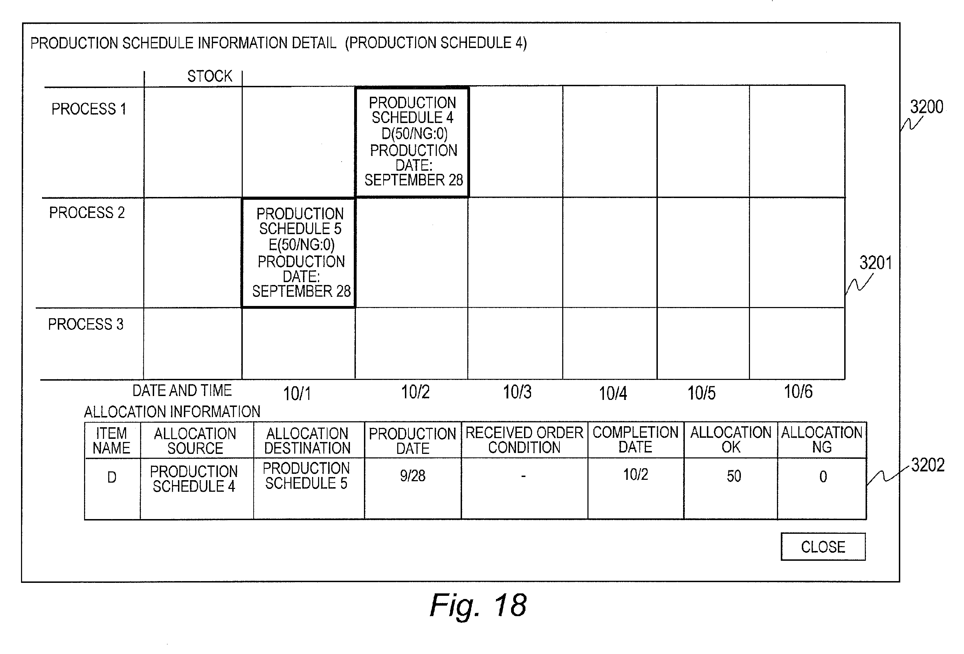

A production schedule information input button 213 and a production schedule information detail button 214 are arranged on a right side of the display area 350. When the production schedule information input button 213 is operated by the input apparatus such as a mouse, the screen transitions to a production schedule information input screen of FIG. 17. When the production schedule information detail button 214 is operated, the screen transitions to a production schedule information detail display screen of FIG. 18.

FIG. 14 illustrates an example in which the received order information and the production schedule information are input/output in a single screen or window, but the display area 310 for displaying and inputting the received order information and the display area 350 for displaying and inputting the production schedule information may be different screens so that the display area 310 is output to the display apparatus of the management terminal apparatus 100 and the display area 350 is output to the output apparatus 5, which is not shown.

Moreover, the screen of FIG. 14 may be output to the output apparatus 5 or the management terminal apparatus 100 after the processing of FIGS. 13A and 13B is finished.

FIG. 15 is a screen image illustrating an example of the received order information input screen. The received order information input screen 2100 includes an input field 2101 for a product name, an input field 2102 for inputting a date and time of a time limit of a delivery, an input field 2103 for a quantity, and an input field 2104 for inputting the number of days of the received order condition.

New received order information is stored in the received order information recording part 31 by operating a run button after inputs from the management terminal apparatus 100 or the input apparatus 6 to the respective input fields 2101 to 2104.

FIG. 16 is a screen image illustrating an example of a received order information detail display screen 3100. The received order information detail display screen 3100 includes an area 3101 for displaying received order information, and production schedule information and production instruction information corresponding to the received order information in a sequence of time series and processes, and an area 3102 for displaying allocation information on products of the received order.

In the area 3101, a vertical axis represents a process, and a horizontal axis represents a time series. The illustrated example represents an example of a received order ID="received order 3" of producing 50 products A having a production start date after October 1. The component B (process 3) is manufactured from the component C in the process 3, and the product A is manufactured from the component B in the process 1 based on the component information recording part 37 and the process information recording part 34. As the result of the allocation processing described above, the component C in the process 1 is produced by the production instruction 2 on October 1, the component B in the process 2 is produced by the production instruction 1 from October 2 to 3, and the product A in the process 3 is produced by the production schedule 2 on October 4.

Then, for each of a production schedule 2 for the product A allocated to a received order 3, the production instruction 1 for the component B allocated to the production schedule 2, and the production instruction 2 for the product C allocated to the production instruction 1, a production date (production start date), a received order condition, a production completion date, an available number of allocations ("allocation OK" of FIG. 16), and an unavailable number of allocation ("allocation NG" of FIG. 18) are displayed in the area 3102.

FIG. 17 is a screen image illustrating an example of the production schedule information input screen. The production schedule information input screen 2400 includes an input field 2401 for a product name, an input field 2402 for inputting a date and time of a production completion, and an input filed 2403 for a quantity.

New production schedule information is stored in the production schedule information recording part 35 by operating a run button after inputs from the management terminal apparatus 100 or the input apparatus 6 to the respective input fields 2401 to 2403.

FIG. 18 is a screen image illustrating an example of a production schedule information detail display screen 3200. The production schedule information detail display screen 3200 includes an area 3201 for displaying production schedule information, and production instruction information or stock information corresponding to the production schedule information in a sequence of time series and processes, and an area 3202 for displaying allocation information on a product or a component to be produced.

In the area 3201, a vertical axis represents a process, and a horizontal axis represents a time series. The illustrated example represents an example of a production schedule ID="production schedule 4" of producing 50 products D having a production start date after September 28. The product D is produced from a product E in a process 2 based on the component information recording part 37 and the process information recording part 34. The products D and E are not shown in the component information recording part 37 of FIG. 5 and the process information recording part 34 of FIG. 6.

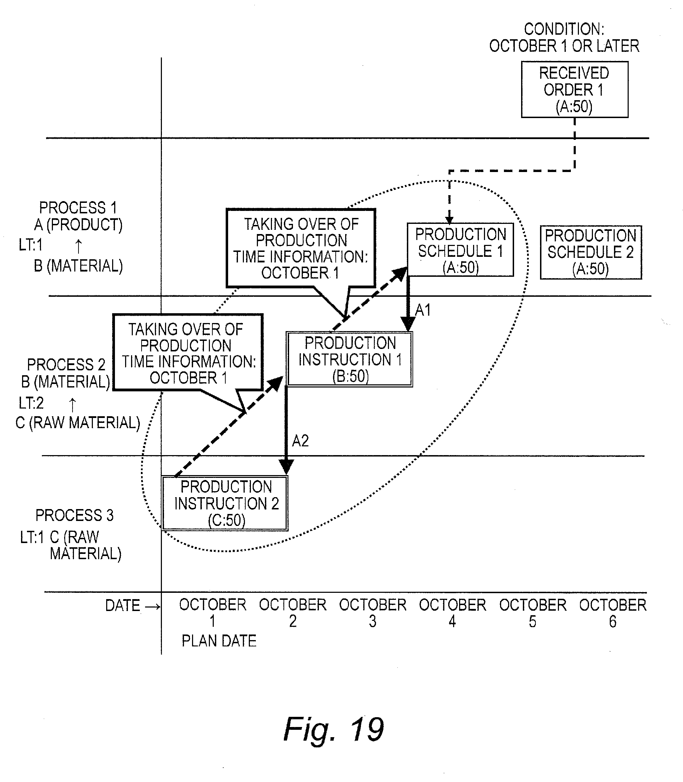

FIG. 19 is a time chart illustrating an example of allocations of a received order, components, and a product. FIG. 19 illustrates an example in which new production instructions 1 and 2 are produced and are allocated by the allocation processing of FIGS. 13A and 13B for a received order ID="received order 1". In FIG. 19, a vertical axis represents a process, and a horizontal axis represents a time series.

First, in the allocation processing, for 50 products A having a due date 314 of October 6 as a received order ID= "received order 1", the production schedule information recording part 35 is searched for production schedule information which can be allocated. In the illustrated example, a production schedule 1 based on which the production is to be completed (completion date 354) on October 4 and a production schedule 2 the completion date of which is October 6 are extracted. On this occasion, in Step S43, the allocation processing execution part 25 selects the production schedule 1 having the oldest completion date 354, and allocates the production schedule 1 to the received order ID="received order 1".

Then, the allocation processing execution part 25 acquires information on the component B required to produce the product A from the component information recording part 37. Then, the allocation processing execution part 25 searches for a production schedule which can be allocated to the production schedule 1. A production schedule for the component (material in FIG. 19) B which can be allocated to the production schedule 1 does not exist, and the allocation processing execution part 25 thus newly generates the production instruction 1 for producing the component B as a preceding process of the production schedule 1 (S50). Then, the allocation processing execution part 25 allocates the production instruction 1 to the production schedule 1 (S51). On this occasion, the allocation processing execution part 25 refers to the process information recording part 34, thereby acquiring such a condition that the manufacturing lead time of the produced product 342 of "B" is two days, and sets October 2, which is two days before the production start date of October 4 of the production schedule 1, to the production start date of the component B.

Then, the allocation processing execution part 25 acquires information on the component C required to produce the component B from the component information recording part 37. Then, the allocation processing execution part 25 searches the production schedule information recording part 35 for a production schedule which can be allocated to the production instruction 1. A production schedule for the component (raw material in FIG. 19) C which can be allocated to the production instruction 1 does not exist, and the allocation processing execution part 25 thus newly generates the production instruction 2 for producing the component C as a preceding process of the production instruction 1 (S50). Then, the allocation processing execution part 25 allocates the production instruction 2 to the production instruction 1 (S51). On this occasion, the allocation processing execution part 25 refers to the process information recording part 34, thereby acquiring such a condition that the manufacturing lead time of the produced product 342 of "C" is one day, and sets October 1, which is one day before the production start time of October 2 of the production instruction 1, to the production start date of the component C.

Then, the allocation processing execution part 25 determines whether or not the production start date="October 1" of the component C satisfies the received order condition 316 of "start production within 5 days" (S52). Then, the allocation processing execution part 25 sets the production start date (production date) of the start point of the production of the product A to October 1, takes over the production start date to the production start date (production date 335) of the production instruction 1, which is the following process of the production instruction 2, and further takes over the production start date of the production instruction 2 to the production date 356 of the production schedule 1, which is the following process of the production instruction 1.

As described above, according to this invention, the production schedule information is retrieved from the received order information, the preceding processes for components constituting the product A are sequentially selected and generated for the allocation, and the processes and the dates for producing the product A are sequentially determined toward the preceding processes. Then, a first production start date or production start time of the component out of the components constituting the product A is set to the production start date of the product A, and is sequentially taken over toward the following processes. In other words, after the processes are determined toward the preceding processes, the production start date (production time information) of the first component is sequentially taken over toward the following processes, and is set as the final production start date of the product.

In this way, the production start date or the production start time of the first component or raw material out of the components (raw materials or materials) constituting the product A is taken over to the following processes, and is treated as the production start date of the product A. As a result, even when elapsed days or an elapsed time from the production start for a food or the like is included in the received order condition, the production plan can be automatically generated.

Such an example that the various tables (the received order information recording part 31 to the component information recording part 37) are stored in the auxiliary storage 3 has been described in the first embodiment, but these tables may be stored in the main storage 2.

Moreover, such an example that a production plan having the production start date satisfying the received order condition is generated has been described in the first embodiment, but a condition for time may be added as the received order information, and such a production plan that the production start date and time satisfy the received order condition may be generated.

### <Second embodiment>

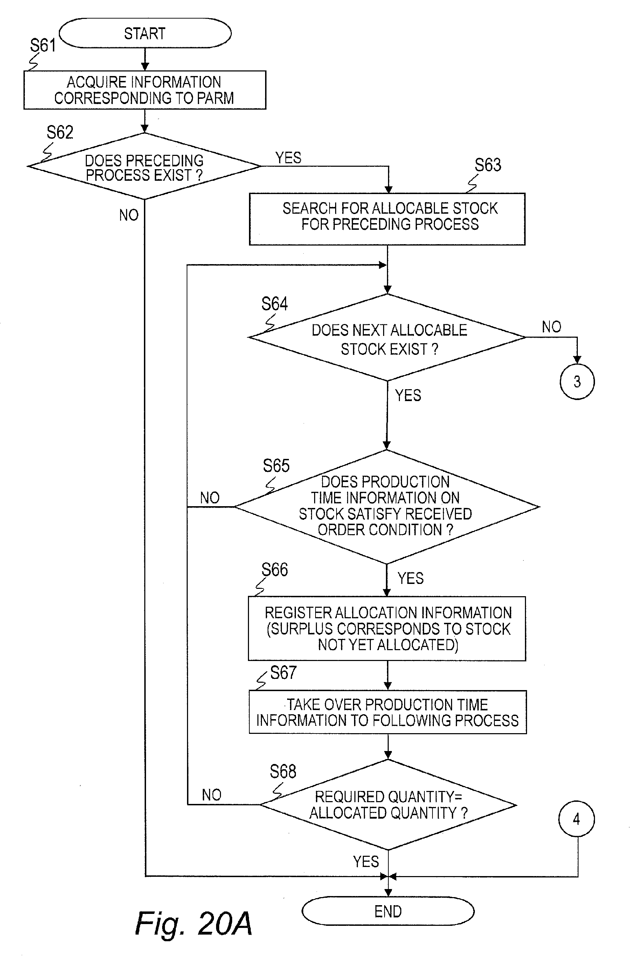

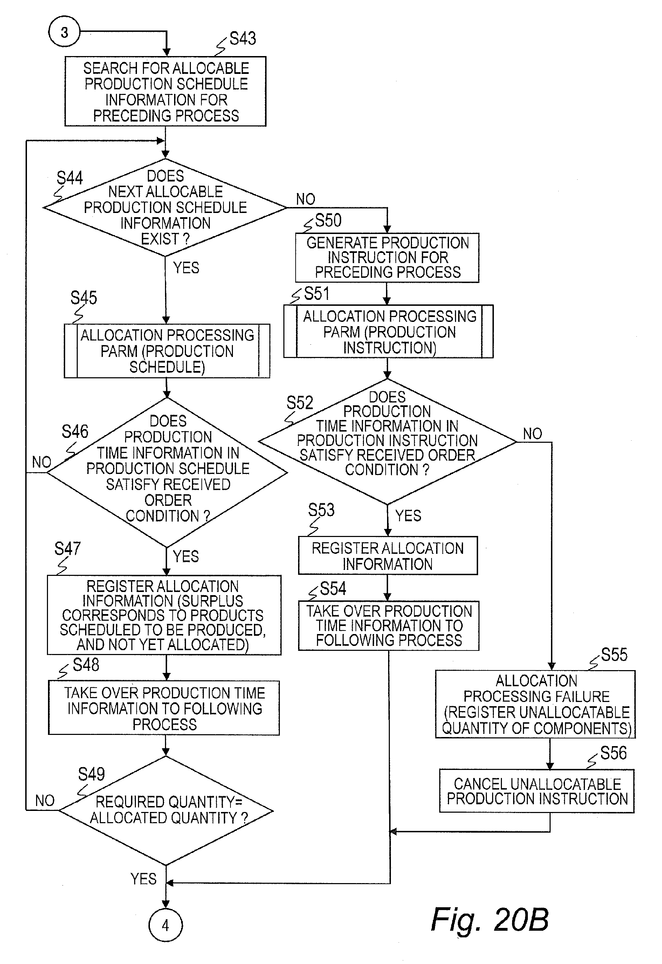

FIGS. 20A and 20B illustrate a second embodiment of this invention, and are flowcharts representing processing carried out by the allocation processing execution part. FIG. 20A illustrates a first half of the processing carried out by the allocation processing execution part, and FIG. 20B illustrates a last half of the processing carried out by the allocation processing execution part.

In the second embodiment, such a configuration that products and components (or raw materials and materials) in stock are used is added to the configuration of the first embodiment, and the other configurations are the same as those of the first embodiment.

The processing of FIGS. 20A and 20B is processing called by the allocation processing in Steps S33 and S36 of FIG. 12 as in FIGS. 13A and 13B according to the first embodiment, and is processing recursively called as in the first embodiment.

First, in Steps S61 and S62, as in Steps S41 and S42 of FIG. 13A according to the first embodiment, the allocation processing execution part 25 acquires from the auxiliary storage 3 the information corresponding to the parameter (PARM of FIG. 20A) when the allocation processing is called (S61), and determines whether a preceding process exists for the current processing subject or not (S62). When a preceding process exists for the processing subject, the allocation processing execution part 25 proceeds to Step S63, and when a preceding process does not exist, the allocation processing execution part 25 finishes the processing.

In Step S63, the allocation processing execution part 25 searches the stock information recording part 32 for stock information which can be allocated to the processing subject. Then, the allocation processing execution part 25 selects the stock ID 321 of the retrieved stock information. When a plurality of pieces of stock information which can be allocated exist, the allocation processing execution part 25 preferentially selects the stock information oldest in the production date 324 of the stock information recording part 32.

In Step S64, the allocation processing execution part 25 determines whether another piece of stock information which can be allocated to the current processing subject (such as production schedule information) exists or not. In this determination, the allocation processing execution part 25 determines whether another piece of stock information which can be allocated to the current processing subject (such as production schedule information) exists or not. The allocation processing execution part 25 searches the component information recording part 37 for a child item name 373 which is a preceding process of the current processing subject, and searches the stock information recording part 32 for stock information matching the child item name 373, thereby determining whether stock information exists or not. Then, when the stock information which can be allocated exists, the allocation processing execution part 25 proceeds to Step S65, and when the stock information which can be allocated does not exist, the allocation processing execution part 25 proceeds to Step S43 of FIG. 20B.

In Step S65, the allocation processing execution part 25 acquires the production date (production start date) 324 as the production time information from the stock information recording part 32 for the stock information which can be allocated, and determines whether the production time information satisfies the received order condition or not. On this occasion, the production time information of the stock information recording part 32 is only the production date (production start date) 324. Thus, when the production date (production start date) 324 of the production schedule information recording part 35 is after the production start date 317 of the received order information recording part 31, the allocation processing execution part 25 determines that the received order condition is satisfied. Then, when the production time information satisfies the received order condition, the allocation processing execution part 25 proceeds to Step S66. On the other hand, when the stock information does not satisfy the received order condition, the allocation processing execution part 25 returns to Step S64, and searches for stock information which can be allocated next.

In Step S66, the allocation processing execution part 25 adds an entry having the stock information ID 321 satisfying the required condition as the allocation destination 362 and having the production schedule information (or the production instruction information) on the preceding process as the allocation source 361 to the allocation information recording part 36, and stores the quantity stored in the stock information recording part (or the production schedule information recording part 35) in the allocated quantity 363, thereby generating allocation information. When the quantity 353 stored in the production schedule information (stock information) is more than the quantity 313 stored in the received order information, a difference acquired by subtracting the quantity 313 stored in the received order information from the quantity 353 stored in the stock information is a quantity of a product or a component scheduled to be produced, and is not allocated yet. The products in stock and not allocated can be managed as a stock in the stock information recording part 32.

Then, in Step S67, the allocation processing execution part 25 takes over the production start date of the stock information corresponding to the allocation information registered in Step S66 to a following process. This processing duplicates the production date (production start date) 324 of the stock information recording part 32 to the production date 356 (production start date) of a production schedule or the production date 335 (production start date) of a production instruction constituting the following process.

In Step S68, the allocation processing execution part 25 determines whether or not the allocated quantity 363 of the allocation information recording part 36 satisfies the quantity 313 (required quantity) corresponding to the received order ID 311 of the received order information recording part 31. When the allocated quantity 363 satisfies the required quantity, the allocation processing execution part 25 finishes the processing. On the other hand, when the allocated quantity 363 does not satisfy the required quantity, the allocation processing execution part 25 returns to Step S64, and searches for stock information which can be allocated next.

Processing of Steps S43 to S56 of FIG. 20B to which the allocation processing execution part 25 proceeds when it is determined in Step S64 that the stock information which can be allocated next does not exist is the same as the processing of FIGS. 13A and 13B according to the first embodiment. In other words, after stock information which can be allocated to the processing subject is retrieved, when stock information which can be allocated no longer exists, production schedule information which can be allocated to the processing subject is retrieved. Then, when production schedule information which can be allocated to the processing subject no longer exists, production instruction information is generated.

As described above, according to the second embodiment of this invention, products or components which can be allocated are retrieved based on the received order information from the stock information and the production schedule information in the stated order, and when stock information exists, the stock information is allocated to the products or components in priority to the production schedule information. Then, the allocation processing execution part 25 sequentially selects or generates processes for the components constituting the product A, and sequentially determines processes and dates (production periods) of the components to be produced toward the preceding processes. Then, a first production start date or production start time of the component out of the components constituting the product A is set to the production start date of the product A, and is sequentially taken over toward the following processes. In other words, after the processes are determined toward the preceding processes, the production start date of the first component is sequentially taken over toward the following processes, and is set as the final production start date of the product.

In this way, the first production start date or production start time of a component (raw material or material) out of the components constituting the product A is taken over to the following processes, and is treated as the production start date of the product A. As a result, even when elapsed days or an elapsed time from the production start for a food or the like is included in the received order condition, the production plan can be automatically generated.

## Claims

1. A production plan planning method for storing, by a computer comprising a processor and a storage, production schedule information on at least one first component constituting a product and at least one second component constituting the at least one first component, in a production schedule information storage part of the storage, receiving an order for the product, and generating a production process for the product,
the production plan planning method comprising:
a first step of receiving, by the computer, the order including production time information on the product in a received order condition as received order information;
a second step of searching, by the computer, the production schedule information storage part for production schedule information on the product stored in the received order information;
a third step of allocating, by the computer, production schedule information on each process for the at least one first component to the retrieved production schedule information; and
a fourth step of controlling, by the computer, the allocated production schedule information on the each process to take over the production time information,
the third step comprising allocating production schedule information satisfying the production time information included in the received order condition of the received order information to the each process,
the fourth step comprising controlling the respective allocated processes to sequentially take over production time information on a first process of the product.

2. The production plan planning method according to claim 1, wherein the third step comprises searching stock information storage part for storing stock information on the at least one first component for stock information satisfying the production time information included in the received order condition, and, when the stock information satisfying the production time information included in the received order condition exists, allocating the stock information to the process in priority to the production schedule information.

3. The production plan planning method according to claim 1, wherein the third step comprises newly generating, when the production schedule information satisfying the production time information included in the received order condition of the received order information is not allocable to the process, production schedule information to be allocated to the process.

4. The production plan planning method according to claim 2, wherein the third step comprises newly generating, when the production schedule information and the stock information satisfying the production time information included in the received order condition of the received order information are not allocable to the process, production schedule information to be allocated to the process.

5. The production plan planning method according to claim 3, further comprising outputting, when the production schedule information satisfying the production time information included in the received order condition of the received order information is not allocable to the process, a notification that the allocation is unavailable.

6. The production plan planning method according to claim 2, wherein the third step comprises allocating, when a plurality of pieces of stock information satisfying the production time information included in the received order condition exist, stock information oldest in the production time information to the process.

7. The production plan planning method according to claim 1, further comprising a fifth step of outputting, by the computer, screen information for displaying the received order information, which has been received, and the allocated production schedule information as a time series.

8. A production plan planning apparatus, comprising a processor and a storage, for storing production schedule information on at least one first component constituting a product and at least one second component constituting the at least one first component, in a production schedule information storage part of the storage, receiving an order for the product, and generating a production process for the product,
the production plan planning apparatus further comprising:
a received order information acquisition part for receiving the order including production time information on the product in a received order condition as received order information; and
an allocation processing part for searching the production schedule information storage part for production schedule information on the product stored in the received order information, allocating production schedule information on each process for the at least one first component to the retrieved production schedule information, and controlling the allocated production schedule information on the each process to take over the production time information,
the allocation processing part being configured to allocate production schedule information satisfying the production time information included in the received order condition of the received order information to the each process, and control the respective allocated processes to sequentially take over production time information on a first process of the product.

9. A non-transitory computer-readable storage medium having stored thereon a program for controlling a computer comprising a processor and a storage to store production schedule information on at least one first component constituting a product and at least one second component constituting the at least one first component, in a production schedule information storage part of the storage, receive an order for the product, and generate a production process for the product,
the program further controlling the computer to execute:
a first procedure of receiving the order including production time information on the product in a received order condition as received order information;
a second procedure of searching the production schedule information storage part for production schedule information on the product stored in the received order information;
a third procedure of allocating production schedule information on each process for the at least one first component to the retrieved production schedule information; and
a fourth procedure of controlling the allocated production schedule information on the each process to take over the production time information,
the third procedure comprising allocating production schedule information satisfying the production time information included in the received order condition of the received order information to the each process,
the fourth procedure comprising controlling the respective allocated processes to sequentially take over production time information on a first process of the product.

10. The program according to claim 9, wherein the third procedure comprises searching stock information storage part for storing stock information on the at least one first component for stock information satisfying the production time information included in the received order condition, and, when the stock information satisfying the production time information included in the received order condition exists, allocating the stock information to the process in priority to the production schedule information.

11. The program according to claim 9, wherein the third procedure comprises newly generating, when the production schedule information satisfying the production time information included in the received order condition of the received order information is not allocable to the process, production schedule information to be allocated to the process.

12. The program according to claim 10, wherein the third procedure comprises newly generating, when the production schedule information and the stock information satisfying the production time information included in the received order condition of the received order information are not allocable to the process, production schedule information to be allocated to the process.

13. The program according to claim 11, wherein the program controls the computer to execute outputting, when the production schedule information satisfying the production time information included in the received order condition of the received order information is not allocable to the process, a notification that the allocation is unavailable.

14. The program according to claim 10, wherein the third procedure comprises allocating, when a plurality of pieces of stock information satisfying the production time information included in the received order condition exist, stock information oldest in the production time information to the process.

15. The program according to claim 9, wherein the program further controls the computer to execute a fifth procedure of outputting screen information for displaying the received order information, which has been received, and the allocated production schedule information as a time series.
